**Europäisches Patentamt**

**European Patent Office**

**Office européen des brevets**

(19)

(11) Veröffentlichungsnummer : **0 318 426 B1**

(12)   # EUROPÄISCHE PATENTSCHRIFT

(45) Veröffentlichungstag der Patentschrift :
27.02.91 Patentblatt 91/09

(51) Int. Cl.$^5$ : **F16B 13/06**

(21) Anmeldenummer : **88810688.7**

(22) Anmeldetag : **06.10.88**

(54) Spreizdübel mit Spreizhülse und einziehbarem Spreizkegel.

(30) Priorität : **23.11.87 DE 3739608**

(43) Veröffentlichungstag der Anmeldung :
**31.05.89 Patentblatt 89/22**

(45) Bekanntmachung des Hinweises auf die
Patenterteilung :
**27.02.91 Patentblatt 91/09**

(84) Benannte Vertragsstaaten :
**AT BE CH DE FR GB IT LI NL SE**

(56) Entgegenhaltungen :
**AT-B- 328 158**
**AT-B- 347 650**
**DE-A- 2 613 499**
**US-A- 4 474 516**

(73) Patentinhaber : **HILTI Aktiengesellschaft**
**FL-9494 Schaan (LI)**

(72) Erfinder : **Froehlich, Peter**
**Lerchenweg 7**
**D-8027 Neuried (DE)**

(74) Vertreter : **Wildi, Roland**
**Hilti Aktiengesellschaft Patentabteilung**
**FL-9494 Schaan (LI)**

## Beschreibung

Die Erfindung betrifft einen Spreizdübel mit teilweise längsgeschlitzter, eine sich im Spreizbereich in Setzrichtung erweiternde Bohrung aufweisender Spreizhülse und einem Ankerbolzen mit einem in die Spreizhülse einziehbaren, sich in Setzrichtung erweiternden Spreizkegel, wobei der Kegelwinkel des Spreizkegels grösser als der Konuswinkel der Bohrung der Spreizhülse ist.

Spreizdübel müssen sehr oft in rissanfälligen Zugzonen von Bauwerken, beispielsweise an Decken oder an der Unterseite von auf Biegung beanspruchten Balken befestigt werden. Vorhandene Risse können sich durch unterschiedliche Belastung oder Temperaturänderungen unter Belastung mehr oder weniger öffnen. Herkömmliche, nur durch Reibschluss verankerbare Spreizdübel sind für solche Anwendungen nicht geeignet, da ihr Verankerungswert beim Oeffnen eines durch das Bohrloch verlaufenden Risses stark absinken kann, was zu einem Ausfall der Befestigung führt.

Ein solcher durch Reibschluss verankerbarer Spreizdübel ist beispielsweise aus der AT-B-328 158 bekannt. Um Materialabschabungen vorzubeugen, kann bei diesem bekannten Spreizdübel der Kegelwinkel des Spreizkegels grösser als der Konuswinkel der Bohrung der Spreizhülse sein. Trotz dieser Massnahme und trotz des Vorsehens zwei hintereinander angeordneter Spreizkegel mit entsprechenden Spreizhülsen kann die beim Auftreten von Rissen entstehende Problematik nicht gelöst werden.

Für Befestigungen in rissanfälligen Zugzonen sind weiterhin Spezialdübel bekannt, die formschlüssig im Untergrund verankert werden. Dabei wird zunächst mittels Spezialwerkzeugen ein hinterschnittenes Bohrloch erzeugt und der Dübel anschliessend in diesem Bohrloch verankert. Diese sogenannten Hinterschnittwerkzeuge sind oft sehr aufwendig und meist auch störanfällig. Bei den Dübeln handelt es sich zum Teil um teure Spezialanfertigungen.

Der Erfindung liegt die Aufgabe zugrunde, einen einfachen und wirtschaftlich herstellbaren Spreizdübel für Befestigungen in rissanfälligen Zugzonen zu schaffen, der hohe Auszugswerte gewährleistet und keine teuren Spezialwerkzeuge für die Herstellung des Bohrloches benötigt.

Erfindungsgemäss wird die Aufgabe dadurch gelöst, dass die Wandstärke der Spreizhülse im Spreizbereich in Umfangsrichtung zu den Längsschlitzen hin abnehmend ist und dass die Spreizhülse im Spreizbereich an ihrer Aussenseite wenigstens einen umlaufenden Ringwulst aufweist.

Die in Umfangsrichtung zu den Längsschlitzen hin abnehmende Wandstärke der Spreizhülse führt beim Spreizvorgang zu einer ungleichmässigen Verteilung des Spreizdruckes entlang dem Umfang des Spreizdübels. Der Spreizdruck ist im Bereich der grössten Wandstärke der Spreizhülse am grössten und nimmt zu den Längsschlitzen hin ab. Die Spreizhülse wird somit im Bereich der grössten Wandstärke am stärksten in das Aufnahmematerial des Untergrunds eingedrückt. Beim Aufweiten der Spreizhülse ergibt sich somit eine polygonartige Aussenform der Spreizhülse. Der auf der Aussenseite der Spreizhülse angeordnete, umlaufende Ringwulst wird beim Aufweiten der Spreizhülse in die Bohrlochwandung eingedrückt und schafft eine formschlüssige Verbindung der Spreizhülse mit dem Untergrund.

Durch die unterschiedlichen Kegelwinkel des Spreizkegels und der Bohrung der Spreizhülse, sowie die in Umfangsrichtung zu den Längsschlitzen hin abnehmende Wandstärke der Spreizhülse wird der Ringwulst insbesondere zu Beginn des Spreizvorganges mehr stark in die Bohrlochwandung eingedrückt, so dass die Spreizhülse im Bohrloch axial festgelegt und damit die weitere Aufspreizung sichergestellt ist.

Die unterschiedlichen Kegelwinkel am Spreizkegel und an der Bohrung der Spreizhülse ergeben zu Beginn des Spreizvorganges eine Linienberührung der Spreizhülse mit dem Spreizkegel am vorderen Ende der Spreizhülse. Im Verlauf des Spreizvorganges soll sich jedoch die Spreizhülse an den Spreizkegel anlegen, um ein gute Verteilung des Spreizdruckes zu ermöglichen. Daher ist zweckmässigerweise die Differenz zwischen dem Kegelwinkel des Spreizkegels und demjenigen der Bohrung der Spreizhülse 5° bis 20°, vorzugsweise etwa 10°. Ein in dieser Grössenordnung liegender Winkelunterschied stellt sicher, dass die Spreizhülse zu Beginn des Spreizvorganges nur an ihrem vorderen Ende am Spreizkegel anliegt und der Spreizdruck an dieser Stelle entsprechend hoch ist, was zu einer Spannungsspitze im Aufnahmematerial und somit zu einem Einprägen des Spreizbereiches in die Bohrlochwandung führt.

Die in Umfangsrichtung zu den Längsschlitzen hin abnehmende Wandstärke der Spreizhülse kann auf unterschiedliche Weise zustandekommen. Für eine einfache Herstellung der Spreizhülse ist es vorteilhaft, dass die unterschiedliche Wandstärke der Spreizhülse durch exzentrische Anordnung der Innenradien gegenüber dem Aussenradius gebildet ist. Die Innenradien sind dabei vorzugsweise grösser als der Aussenradius der Spreizhülse. Die Innenkontur der Spreizhülse kann erzeugt werden durch einen zylindrischen Körper, dessen Achse zur Längsachse der Spreizhülse geneigt ist oder durch einen kegeligen Körper, dessen Achse parallel zur Längsachse der Spreizhülse verläuft. Entsprechend ist der Innenradius im Spreizbereich der Spreizhülse konstant oder vergrössert sich gegen das in Setzrichtung vordere Ende der Spreizhülse.

Um zu erreichen, dass bei maximaler Aufspreizung der Spreizhülse diese wenigstens teilweise über den gesamten Umfang am Spreizkegel anliegt, ist es zweckmässig, dass der grösste Innenradius der Spreizhülse etwa dem grössten Radius des Spreizkegels entspricht. Wenn der Spreizkegel mit seinem grössten Radius voll in die Spreizhülse eingezogen wird, liegt somit die Spreizhülse über den gesamten Umfang am Spreizkegel an.

Der an der Aussenseite der Spreizhülse im Spreizbereich angeordnete Ringwulst darf das Einführen des Spreizdübels in ein Bohrloch nicht behindern. Andererseits soll wenigstens ein Teil des Verankerungswertes formschlüssig über den Ringwulst auf den Untergrund eingeleitet werden. Um dies zu ermöglichen, weist der Ringwulst vorteilhafterweise ein sägezahnartiges Profil mit zum rückwärtigen Ende der Spreizhülse hingewandter, kürzerer Flanke auf. Die zum rückwärtigen Ende der Spreizhülse hingewandte, kürzere Flanke kann relativ steil, im Extremfall etwa rechtwinklig zur Dübellängsachse verlaufen. Die zum vorderen Ende der Spreizhülse hingewandte längere Flanke verläuft unter einem entsprechend flachen Winkel zur Dübellängsachse und ergibt beim Einführen des Dübels in ein Bohrloch eine gute Zentrierung.

Die Erfindung soll nachstehend anhand der sie beispielsweise wiedergebenden Zeichnungen näher erläutert werden. Es zeigen :

Fig. 1 einen erfindungsgemässen Spreizdübel, in ungespreiztem Zustand,

Fig. 2 einen Querschnitt durch den in Fig. 1 dargestellten Spreizdübel, entlang der Linie II-II,

Fig. 3 den Spreizdübel gemäss Fig. 1 und 2, in gespreiztem, verankertem Zustand,

Fig. 4 einen Querschnitt durch den in Fig. 3 dargestellten Spreizdübel, entlang der Linie IV-IV.

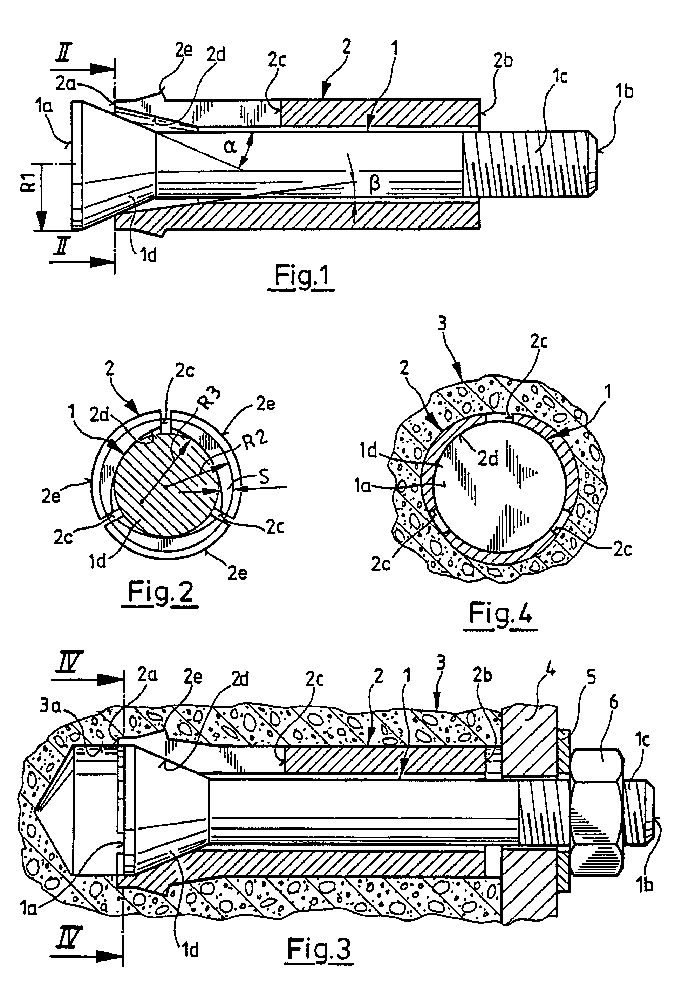

Der aus den Fig. 1 bis 4 ersichtliche Spreizdübel besteht aus einem Ankerbolzen 1 und einer Spreizhülse 2. Der Ankerbolzen 1 weist ein in Setzrichtung vorderes Ende 1a und ein rückwärtiges Ende 1b auf. Der an das rückwärtige Ende 1b anschliessende Bereich des Ankerbolzens 1 ist mit einem Gewinde 1c versehen. Der an das vordere Ende 1a angrenzende Bereich ist als sich in Setzrichtung im Querschnitt erweiternder Spreizkegel 1d ausgebildet. Die Spreizhülse 2 weist ebenfalls ein in Setzrichtung vorderes Ende 2a und ein rückwärtiges Ende 2b auf. Die Spreizhülse 2 ist mit vom vorderen Ende 2a ausgehenden Längsschlitzen 2c versehen. Die Längsschlitze 2c dienen der radialen Aufweitbarkeit des an das vordere Ende 2a angrenzenden Spreizbereiches. Die Spreizhülse 2 ist im Spreizbereich mit einer sich in Setzrichtung erweiternden Bohrung 2d versehen. Der Kegelwinkel α des Spreizkegels 1d ist grösser als der Kegelwinkel ß der Bohrung 2d. Dadurch wird erreicht, dass die Spreizhülse 2 in dem in Fig. 1 dargestellten Ausgangszustand nur mit der vordersten Kante am Spreizkegel 1d anliegt. Die Spreizhülse 2 ist im Spreizbereich an ihrer Aussenseite mit einem umlaufenden Ringwulst 2e versehen. Dieser Ringwulst 2e weist ein sägezahnartiges Profil auf und dient zur formschlüssigen Verbindung der Spreizhülse 2 mit einem Aufnahmematerial 3.

Wie insbesondere Fig. 2 zeigt, nimmt die Wandstärke S der Spreizhülse 2 im Spreizbereich in Umfangsrichtung zu den Längsschlitzen 2c hin ab. Diese unterschiedliche Wandstärke S kann beispielsweise dadurch erreicht werden, dass die Innenradien R3 gegenüber dem Aussenradius R2 der Spreizhülse 2 exzentrisch angeordnet sind. Der grösste Innenradius R2 entspricht dabei etwa dem grössten Radius R1 des Spreizkegels 1d. Dadurch wird erreicht, dass die Spreizhülse 2 bei vollständig in die Spreizhülse 2 eingezogenem Spreizkegel 1d wenigstens an ihrem vorderen Ende 2a über den gesamten Umfang am Spreizkegel 1d anliegt. Somit wird eine gleichmässige Verteilung des Spreizdruckes über den gesamten Umfang erreicht. Durch die unterschiedlichen Kegelwinkel α und β zwischen dem Spreizkegel 1d und der Bohrung 2d erfolgt zu Beginn des Spreizvorganges eine sehr starke Aufweitung der Spreizhülse 2, so dass diese im Bereich der grössten Wandstärke in die Wandung des Bohrloches 3a eingedrückt wird. Am Ringwulst 2e treten dabei Druckspitzen auf, welche ein formschlüssiges Eindringen des Ringwulstes 3e in die Wandung des Bohrloches 3a im Aufnahmematerial 3 bewirken. Ein zu befestigendes Bauteil 4 ist auf den Ankerbolzen 1 aufgesteckt und mittels einer Unterlagsscheibe 5 sowie einer Sechskantmutter 6 auf dem Aufnahmematerial 3 befestigt. Durch die formschlüssige Verbindung der Spreizhülse 2 über den Ringwulst 2e mit dem Aufnahmematerial 3 ist dieser Spreizdübel auch für Befestigungen in rissanfälligen Zugzonen geeignet.

Fig. 4 zeigt die Anlage der Spreizhülse 2 am Umfang des Ankerbolzens 1. Durch die beim Aufweiten der Spreizhülse 2 erzielte polygonartige Aussenform weist der Spreizdübel auch eine gute Sicherung gegen Verdrehen auf.

**Ansprüche**

1. Spreizdübel mit teilweise längsgeschlitzter, eine sich im Spreizbereich in Setzrichtung erweiternde Bohrung (2d) aufweisender Spreizhülse (2) und einem Ankerbolzen (1) mit einem in die Spreizhülse (2) einziehbaren, sich in Setzrichtung erweiternden Spreizkegel (1d), wobei der Kegelwinkel α des Spreizkegels (1d) grösser als der Konuswinkel (β) der Bohrung (2d) der Spreizhülse (2) ist, dadurch gekennzeichnet, daß die Wandstärke der Spreizhülse (2) im Spreizbereich in Umfangsrichtung zu den Längsschlitzen (2c) hin abnehmend ist und daß die Spreizhülse (2) im Spreizbereich an ihrer Aussenseite wenigstens einen umlaufenden Ringwulst (2e) aufweist.

2. Spreizdübel nach Anspruch 1, dadurch gekennzeichnet, dass die Differenz zwischen dem Kegelwinkel ($\alpha$) des Spreizkegels (1d) und dem Konuswinkel ($\beta$) der Bohrung (2d) der Spreizhülse (2) 5° bis 20°, vorzugsweise etwa 10° beträgt.

3. Spreizdübel nach Anspruch 1 oder 2, dadurch gekennzeichnet, dass die unterschiedliche Wandstärke der Spreizhülse (2) durch exzentrische Anordnung der Innenradien (R3) gegenüber dem Aussenradius (R2) gebildet ist.

4. Spreizdübel nach einem der Ansprüche 1 bis 3, dadurch gekennzeichnet, dass der grösste Innenradius (R3) der Spreizhülse (2) etwa dem grössten Radius (R1) des Spreizkegels (1d) entspricht.

5. Spreizdübel nach einem der Ansprüche 1 bis 4, dadurch gekennzeichnet, dass der Ringwulst (2e) ein sägezahnartiges Profil mit zum rückwärtigen Ende (2b) der Spreizhülse (2) hingewandter, kürzerer Flanke aufweist.

## Claims

1. An expansible dowel having a partially longitudinally slotted expansible sleeve (2) having a bore (2d) widening in the expansion region in the setting direction, and an anchor bolt (1) with an expansion cone (1d) which can be drawn into the expansible sleeve (2) and which widens in the setting direction, the taper angle ($\alpha$) of the expansion cone (1d) being larger than the taper angle ($\beta$) of the bore (2d) of the expansible sleeve (2), characterised in that the wall thickness of the expansible sleeve (2) in the expansion region is decreasing in the circumferential direction towards the longitudinal slots (2c) and in that the expansible sleeve (2) in the expansion region has on its outside at least one annular bead (2e).

2. An expansible dowel according to claim 1, characterised in that the difference between the taper angle ($\alpha$) of the expansion cone (1d) and the taper angle ($\beta$) of the bore (2d) of the expansible sleeve (2) amounts to 5° up to 20°, preferably about 10°.

3. An expansible dowel according to claim 1 or 2, characterised in that the different wall thickness of the expansible sleeve (2) is formed by eccentric arangement of the inner radii (R3) relative to the outer radius (R2).

4. An expansible dowel according to one of claims 1 to 3, characterised in that the largest inner radius (R3) of the expansible sleeve (20) corresponds approximately to the largest radius (R1) of the expansion cone (1d).

5. An expansible dowel according to one of claims 1 to 4, characterised in that the annular bead (2e) has a sawtoothlike profile with the shorter flank turned towards the rearward end (2b) of the expansible sleeve (2).

## Revendications

1. Cheville à expansion comprenant une douille expansible (2) partiellement fendue dans le sens longitudinal et présentant un alésage (2d) qui s'élargit dans la zone d'expansion dans la direction de pose, et un boulon d'ancrage (1) avec un cône d'expansion (1d) rétractable dans la douille expansible (2) et s'élargissant dans la direction de pose, l'angle de cône ($\alpha$) du cône d'expansion (1d) étant supérieur à l'angle de cône ($\beta$) de l'alésage (2d) de la douille expansible (2), **caractérisée en ce** que, dans la zone d'expansion, l'épaisseur de paroi de la douille expansible (2) diminue dans le sens circonférentiel en direction des fentes longitudinales (2c), et que la douille expansible (2) présente dans la zone d'expansion, sur sa face extérieure, au moins un bourrelet annulaire (2e).

2. Cheville à expansion selon la revendication 1, caractérisée en ce que la différence entre l'angle de cône ($\alpha$) du cône d'expansion (1d) et l'angle de cône ($\beta$) de l'alésage (2d) de la douille expansible (2) est de 5° à 20°, de préférence environ 10°.

3. Cheville à expansion selon l'une des revendications 1 ou 2, caractérisée en ce que la différence d'épaisseur de paroi de la douille expansible (2) est obtenue par une disposition excentrique des rayons intérieurs (R3) par rapport au rayon extérieur (R2).

4. Cheville à expansion selon l'une des revendications 1 à 3, caractérisée en ce que le plus grand rayon intérieur (R3) de la douille expansible (2) correspond approximativement au plus grand rayon (R1) du cône d'expansion (1d).

5. Cheville à expansion selon l'une des revendications 1 à 4, caractérisée en ce que le bourrelet annulaire (2e) présente un profil en dent de scie dont le flanc plus court est dirigé vers l'extrémité postérieure (2b) de la douille expansible (2).

Fig.1

Fig.2

Fig.4

Fig.3